# EUROPÄISCHE PATENTSCHRIFT

(11) **EP 4 429 823 B1**
(45) Veröffentlichungstag und Bekanntmachung des Hinweises auf die Patenterteilung: **01.04.2026**
(21) Anmeldenummer: 22814323.6
(22) Anmeldetag: 07.11.2022
(51) Int. Cl.: B01L 3/02, G01N 35/10, A01K 61/17, B65G 47/14, B07B 13/00, B07C 5/00, A01K 43/04, G01N 33/08

(54) **HANDHABUNGSVORRICHTUNG UND VERFAHREN ZUM DISPENSIEREN VON OBJEKTEN**
HANDLING DEVICE AND METHOD FOR DISPENSING OBJECTS
DISPOSITIF DE MANIPULATION ET PROCÉDÉ DE DISTRIBUTION D'OBJETS

(30) Priorität: 09.11.2021 DE 102021212603
(43) Veröffentlichungstag der Anmeldung: 18.09.2024
(73) Patentinhaber: Fraunhofer-Gesellschaft zur Förderung der angewandten Forschung e.V., 80686 München (DE)
(72) Erfinder: STANDFEST, Bastian, 70569 Stuttgart (DE); KLINGER, Michael, 70569 Stuttgart (DE); THOMA, Martin, 70569 Stuttgart (DE); FEESER, Simon, 70569 Stuttgart (DE); GRAEVE, Mario, 70569 Stuttgart (DE)
(74) Vertreter: Pfenning, Meinig & Partner mbB
(86) Internationale Anmeldenummer: PCT/EP2022/080961
(87) Internationale Veröffentlichungsnummer: WO 2023/083740

(56) Entgegenhaltungen:
- US-A- 3 297 157
- US-A- 4 201 525

## Beschreibung

Die Erfindung betrifft eine Handhabungsvorrichtung zur Handhabung von Objekten, die eine drehbare Lochscheibe aufweist, in deren Löchern die Objekte transportierbar sind. Die Erfindung betrifft außerdem ein Verfahren zum Dispensieren von Objekten in eine Mikrotiterplatte, in dem Objekte mit einer erfindungsgemäßen Handhabungsvorrichtung bewegt werden und in die Mikrotiterplatte dispensiert werden.

In vielen biologischen Prozessen spielen makroskopische Organismen wie beispielsweile Organoide, Spheroide, Fisch- oder Froscheier eine essentielle Rolle. Diffizil ist jedoch die Probenvorbereitung der Organismen: Diese müssen von einer Fachkraft mikroskopisch klassifiziert und anschließend in einer Mikrotiterplatte abgelegt werden. Um eine Mikrotiterplatte mit 96 Gefäßen zu befüllen, benötigt eine trainierte Laborangestellte etwa zwölf Minuten. Die Fehlerrate ist aufgrund der monotonen Tätigkeit erhöht. Um diesen Prozess zu automatisieren, müssen die zu untersuchenden Organismen zuerst durch eine bildgebende Messtechnik untersucht und klassifiziert werden. Da sich die Morphologie stark unterscheiden kann, muss eine algorithmusgestützte Sortierentscheidung gefällt werden, ob der detektierte Organismus für den weiteren Prozess genutzt werden kann oder nicht.

Für biologische Tests reicht eine reine Klassifizierung jedoch nicht aus. Es ist oft erforderlich, dass die Organismen in vereinzelter Form vorliegen. Im Laborumfeld hat sich dabei die Mikrotiterplatte (MTP) als absoluter Standard für die Aufbewahrung und Verarbeitung von vereinzelten Proben etabliert. Dabei handelt es sich um eine beispielsweise ca. 12 x 8 cm große Kunststoffplatte, in welche eine variable Anzahl an Vertiefungen (Wells) eingebracht sind, in denen die Organismen gelagert sind.

Das Problem bei der automatisierten Vereinzelung dieser Organismen ist die äußerst empfindliche Morphologie. Äußere Einflüsse wie bspw. hohe Scherkräfte sollten daher vermieden werden, da dies zu einer Beschädigung und folglich zum Aussortieren der Probe führen kann. Außerdem stellt der Transport in einem schlauchbasiertem System eine große Herausforderung dar, da dies bei höheren Durchsätzen und dementsprechend einer größeren Ansammlung von Organsimen in einem Kanal- oder Schlauchsystem zu einer Pfropfbildung und folglich zum Verstopfen des Systems führen kann.

Ein weiterer wichtiger Aspekt ist die Reinigbarkeit solcher Systeme. Da im Labumfeld oft sterile Bedingungen herrschen, müssen die Komponenten leicht reinigbar sein. Des Weiteren sollen gegebenenfalls unterschiedliche Organismen mit ein und demselben Konzept klassifiziert und vereinzelt werden, weshalb es zusätzlich wichtig ist, dass das alle Produktberührenden Komponenten leicht zugänglich und herausnehmbar sind.

Es gibt bereits eine Vielzahl von Sortiergeräten für makroskopische Organismen. Die meisten davon sind ausschließlich für die Sortierung und nicht für die Vereinzelung gedacht.

In US8940541 und US2021072142 werden Fischeier durch ein rotatorisches Element vereinzelt und anschließend in einen Kanal/Schlauch geleitet. Das Schlauchende wird durch eine zweidimensionale Bewegung über einer Mikrotiterplatte verfahren und die Fischeier in die einzelnen Wells vereinzelt. Durch die Einkopplung der Organismen in die Kanäle/Schläuche kann es bei einer erhöhten Konzentration zur Pfropfbildung kommen, wodurch die Schläuche verstopfen und der Prozess abgebrochen werden muss. Kanal- und Schlauchsysteme sind zudem nur bedingt reinigbar, was dazu führen kann, dass das gesamte Schlauchsystem ausgetauscht werden muss.

In US3613884 und US3746166 werden beispielsweise Fischeier mittels einer sich drehenden Lochscheibe als befruchtet oder unbefruchtet klassifiziert und mittels Druckluftimpuls in zwei unterschiedliche Behälter überführt. Der Prozess setzt jedoch eine recht hohe Dichte an Fischeiern voraus, damit diese die Löcher der Lochscheibe zuverlässig befüllen. Anderenfalls wird das Verfahren sehr langsam.

Aufgabe der vorliegenden Erfindung ist es, eine Handhabungsvorrichtung und ein Verfahren zum Dispensieren von Objekten anzugeben, mit denen auch Objekte gehandhabt, untersucht und dispensiert werden können, die in geringer Konzentration in einer Flüssigkeit vorliegen.

Die Aufgabe wird gelöst durch die Handhabungsvorrichtung nach Anspruch 1 sowie das Verfahren zur Dispensierung nach Anspruch 14. Die jeweiligen abhängigen Ansprüche geben vorteilhafte Weiterbildungen der Handhabungsvorrichtung nach Anspruch 1 sowie des Verfahrens nach Anspruch 14 an.

Die Erfindung betrifft eine Handhabungsvorrichtung zur Handhabung von Objekten. Die Objekte liegen dabei in einer Flüssigkeit vor. Eine Mischung aus Objekten mit Flüssigkeit soll hier als Suspension bezeichnet werden. Die Objekte können beispielsweise fest und/oder gallertartig sein. Insbesondere können die Objekte optional Fischeier sein.

Die erfindungsgemäße Handhabungsvorrichtung weist eine Wanne zur Aufnahme der die Objekte enthaltenden Suspension auf. Unter einer Wanne wird dabei vorzugsweise eine Vorrichtung verstanden, die eine Kavität oder Vertiefung hat, in der eine Flüssigkeit bzw. Suspension ruhen kann. Die Wanne kann vorteilhaft nach oben offen sein. Im Folgenden soll als "unten" jene Richtung bezeichnet werden, in der sich die Kavität oder Vertiefung der Wanne erstreckt. Bei bestimmungsgemäßer Verwendung der Handhabungsvorrichtung ist "unten" jene Richtung, in die die Gravitationskraft wirkt.

Die erfindungsgemäße Handhabungsvorrichtung weist eine Lochscheibe auf, die um eine Achse drehbar ist, die hier als Lochscheibendrehachse bezeichnet werden soll. Vorteilhafterweise ist die Lochscheibe kreisförmig.

Die Lochscheibe weist entlang ihres Umfangs eine Vielzahl an Durchgangslöchern auf, die sich durch die Lochscheibe hindurch erstrecken. Vorzugsweise haben alle Löcher den gleichen Abstand von der Lochscheibendrehachse. Eine Durchgangsrichtung der Löcher steht vorzugsweise senkrecht auf den zueinander parallelen Scheibenoberflächen der Lochscheibe. Vorteilhafterweise sind die Löcher zylinderförmig, wobei die Zylinderachsen der Löcher senkrecht auf den zueinander parallelen Scheibenoberflächen der Lochscheibe stehen. Die Löcher erstrecken sich durch die Lochscheibe hindurch, d. h. sie haben jeweils in beiden Scheibenoberflächen der Lochscheibe eine Öffnung.

Erfindungsgemäß ist die Lochscheibe so angeordnet, dass sie teilweise in die Wanne hineinragt, sodass sich ein Teil der Durchgangslöcher in der Wanne befindet. Die Lochscheibe schneidet also vorteilhafterweise eine obere Öffnung, die durch einen Rand der Kavität bzw. Vertiefung gebildet wird. Wird die Wanne bestimmungsgemäß mit der Suspension gefüllt, befindet sich also vorteilhaft ein Teil der Lochscheibe in der Suspension und ein anderer Teil der Lochscheibe außerhalb der Suspension.

Die erfindungsgemäße Handhabungsvorrichtung weist außerdem eine Barriere auf, die hinter zumindest jenen der Durchgangslöcher angeordnet ist, die sich in der Wanne befinden. Die Barriere ist dabei so ausgestaltet, dass sie ein Austreten der Objekte aus den Durchgangslöchern in Richtung der Barriere verhindert aber ein durchtreten der Flüssigkeit durch zumindest einen Teil jener Durchgangslöcher, in der Wanne befinden, in Richtung der Barriere erlaubt. Beispielsweise kann die Barriere als Scheibe ausgestaltet sein, die parallel zu der Lochscheibe angeordnet ist und ein Langloch aufweist, das sich durch diese Scheibe hindurch erstreckt. Dabei kann das Langloch entlang der Durchgangslöcher verlaufen. Vorteilhafterweise kann das Langloch parallel zum Rand der Lochscheibe verlaufen und einen Abstand zur Lochscheibendrehachse haben, der ungleich jenem Abstand ist, den die Durchgangslöcher zur Lochscheibendrehachse haben. Vorteilhafterweise hat die Barriere von der Lochscheibe einen Abstand, der kleiner ist, als ein Durchmesser der Durchgangslöcher. Insbesondere ist vorteilhafterweise der Abstand der Barriere von der Lochscheibe kleiner als die Objekte in der Suspension. Um ein durchtreten der Flüssigkeit zu ermöglichen sollte jedoch der Abstand der Barriere von der Lochscheibe größer als Null sein.

Die Barrierescheibe und die Lochscheibe können vorteilhafterweise getauscht werden um unterschiedlich große Objekte zu handhaben. Für größere Objekte kann der Durchmesser der Durchgangslöcher und/oder die Tiefe der Durchgangslöcher, also die Dicke der Lochscheibe, angepasst werden. Vorzugsweise wir die Dicke der Barrierescheibe um den gleichen Betrag verringert, um den die Dicke der Lochscheibe erhöht wird, da dann keine Maßnahmen erforderlich sind, Nuten zu vergrößern, in denen die Barrierescheibe und die Lochscheibe laufen.

Die erfindungsgemäße Handhabungsvorrichtung weist außerdem eine Flüssigkeitstransportvorrichtung auf, die eingerichtet ist, die Flüssigkeit aktiv durch jene Durchgangslöcher zu befördern, die sich in der Wanne befinden und durch welche die Barriere das durch treten der Flüssigkeit erlaubt. Unter einem aktiven Flüssigkeitstransport wird dabei vorzugsweise ein Vorgang verstanden, bei dem, beispielsweise durch einen Aktor, aktiv eine Druckdifferenz erzeugt wird, zu deren Ausgleich die Flüssigkeit sich bewegt. Das aktive Befördern der Flüssigkeit kann optional auch als Pumpen bezeichnet werden. Die Flüssigkeitstransportvorrichtung kann also auch eine Pumpe sein.

Dadurch, dass die Flüssigkeit aktiv durch die Durchgangslöcher bewegt wird, wird weitgehend unabhängig von der Konzentration der Objekte in der Flüssigkeit sichergestellt, dass möglichst viele der Durchgangslöcher, die sich gerade in der Suspension befinden, mit Objekten befüllt werden. Der Befüllungsvorgang wird dadurch auch bei geringen Konzentrationen der Objekte in der Suspension deutlich beschleunigt.

In einer vorteilhaften Ausgestaltung der Erfindung kann die Handhabungsvorrichtung einen Abflussbereich aufweisen, der auf jener der Wanne abgewandten Seite der Lochscheibe und der Barriere angeordnet ist. Der Abflussbereich und die Wanne können als Teilbereiche der Kavität oder Vertiefung angesehen werden. Die Flüssigkeitstransportvorrichtung kann vorteilhafterweise eingerichtet sein, die Flüssigkeit aus der Wanne durch die Durchgangslöcher hindurch in den Abflussbereich zu transportieren.

In einer vorteilhaften Ausgestaltung kann der Abflussbereich eine Rinne sein, die entlang des Langlochs der Barrierescheibe verläuft und sich in das Langloch öffnet, wobei vorzugsweise das Langloch und die Rinne eine gleiche Länge haben können. Das Langloch in der Barrierescheibe kann also den Abflussbereich in Richtung der Barrierescheibe fortsetzen.

In einer besonders vorteilhaften Ausgestaltung kann die Flüssigkeitstransportvorrichtung einen Flüssigkeitskanal aufweisen, der mit dem Abflussbereich so verbunden ist, dass die Flüssigkeit durch den Flüssigkeitskanal aus dem Abflussbereich heraussaugbar ist. Zum Beispiel kann der Flüssigkeitskanal durch eine Öffnung in den Abflussbereich münden. Der Flüssigkeitskanal kann außerdem mit der Wanne so verbunden sein, dass die Flüssigkeit durch den Flüssigkeitskanal in die Wanne bewegbar ist. Hierzu kann vorteilhafterweise der Flüssigkeitskanal durch eine Öffnung in die Wanne münden. Es ist grundsätzlich aber auch möglich, dass der Flüssigkeitskanal über der Kavität oder Vertiefung endet, so dass aus dem Flüssigkeitskanal austretende Flüssigkeit in die Kavität oder Vertiefung fließt. Besonders vorteilhaft kann der Flüssigkeitskanal einen Schlauch aufweisen oder ein Schlauch sein.

In einer vorteilhaften Ausgestaltung der Erfindung kann die Flüssigkeitstransportvorrichtung eine drehbare Kompressionsscheibe aufweisen, die entlang ihres Umfangs Kompressionselemente aufweist. Dabei kann die Kompressionsscheibe so angeordnet sein, dass sich die Kompressionselemente bei Drehung der Kompressionsscheibe am Flüssigkeitskanal vorbei bewegen und diesen dabei komprimieren. Hierbei ist es insbesondere vorteilhaft, wenn der Flüssigkeitskanal zumindest in jenem Bereich, an dem sich die Kompressionselemente vorbei bewegen, einen komprimierbaren Schlauch aufweist. Bevorzugt wird der Flüssigkeitskanal durch die Kompressionselemente bis zu einem vollständigen Verschluss des Flüssigkeitskanal als komprimiert.

Die Kompressionsscheibe weist die Kompressionselemente entlang ihres Umfangs auf. Dies bedeutet, dass der Radius der Kompressionsscheibe in einer Ebene variiert, die senkrecht zu einer Drehachse der Kompressionsscheibe liegt, und in der auch der Flüssigkeitskanal in jenem Bereich verläuft, in dem er von den Kompressionselementen komprimiert wird. Im einfachsten Fall können die Kompressionselemente Bereiche der Kompressionsscheibe sein, in denen die Kompressionsscheibe gegenüber angrenzenden Bereichen vergrößerte radiale Erstreckung hat.

In einer vorteilhaften Ausgestaltung kann die Kompressionsscheibe durch zwei kreisförmige zueinander parallele Scheiben gebildet werden, zwischen denen die Kompressionselemente entlang der Ränder der parallelen Scheiben angeordnet sind. Vorzugsweise verlaufen die Ränder der parallelen Scheiben parallel zueinander. Die Kompressionselemente können zum Beispiel zylinderförmige Elemente sein, deren Zylinderachsen senkrecht auf den parallelen Scheiben stehen und die entlang der Ränder der parallelen Scheiben, vorzugsweise äquidistant, angeordnet sind. Die Kompressionselemente können hinter die Ränder der parallelen Scheiben versetzt sein. In diesem Fall variiert der Radius der Kompressionsscheibe nur in Ebenen, die durch die Kompressionselemente geschnitten werden. Die Kompressionsscheibe weist jedoch auch Ebenen auf, nämlich jene, in denen die parallelen Scheiben vorliegen, in denen der Radius nicht variiert.

Vorteilhafterweise wird die Kompressionsscheibe durch einen Antrieb, beispielsweise einen Elektromotor, angetrieben, um um ihre Drehachse zu rotieren.

In einer vorteilhaften Ausgestaltung der Erfindung kann die Handhabungsvorrichtung zwei Module aufweisen. Dabei kann ein erstes Modul die Wanne, die Lochscheibe, den Abflussbereich und den Flüssigkeitskanal enthalten und ein zweites Modul die Kompressionsscheibe enthalten. Die Module sind dann vorteilhafterweise als Ganzes miteinander verbindbar und voneinander trennbar. Das bedeutet, dass in einem Arbeitsschritt alle Bestandteile der beiden Module gleichzeitig zueinander in die vorgesehene Position gebracht werden. Es können sich dann optional weitere Schritte anschließen, mit denen die Module aneinander fixiert werden. Der modulare Aufbau erlaubt es, dass die Wanne und die Lochscheibe leicht voneinander getrennt werden können, wodurch sie ohne größeren Aufwand gereinigt und/oder autoklaviert werden können.

Vorteilhafterweise kann der Flüssigkeitskanal Teil des gleichen Moduls sein wie die Wanne, während die Kompressionsscheibe Teil des anderen Moduls ist. Hierdurch kann beim Einsetzen der Wanne der gewünschte Kontakt zwischen dem Flüssigkeitskanal und der Kompressionsscheibe automatisch hergestellt werden. Ein meist umständliches Einlegen eines Schlauches wird dadurch hinfällig. Außerdem kann der Flüssigkeitskanal, beispielsweise wenn er ein Schlauch ist, einfach gewechselt werden.

Vorteilhafterweise kann die Lochscheibe gegen einem Flüssigkeitsspiegel der Flüssigkeit bzw. Suspension in der Wanne bei bestimmungsgemäßer Benutzung der Handhabungsvorrichtung um einen Winkel geneigt sein, der größer als 90°, vorzugsweise größer oder gleich 120° ist und/oder kleiner als 180°, vorzugsweise kleiner oder gleich 150° ist. Dabei wird der Winkel oberhalb des Flüssigkeitsspiegels gemessen. Der Flüssigkeitsspiegel und die Lochscheibe also vorzugsweise außerhalb der Flüssigkeit einen stumpfen Winkel ein. Optional kann der besagte Winkel anstelle des Flüssigkeitsspiegels auch auf die obere Öffnung der Kavität bzw. Vertiefung bezogen werden. Dieser Bezug kann insbesondere dann sinnvoll sein, wenn sich die Kavität bzw. Vertiefung in Richtung dieser Öffnung zumindest in einem Bereich angrenzend an die Öffnung monoton vergrößert.

Erfindungsgemäß weißt die Handhabungsvorrichtung eine Detektionsvorrichtung auf. Dieser ist am Rand der Lochscheibe so angeordnet, dass mit ihr zumindest eine Eigenschaft von in den Durchgangslöchern der Lochscheibe vorliegenden Objekten detektierbar ist. Die Detektionsvorrichtung kann in diesem Fall auch als Untersuchungsvorrichtung bezeichnet werden.

Vorteilhafterweise umgreift die Detektionsvorrichtung den Rand der Lochscheibe und weist eine Optik auf, mit der die zumindest eine Eigenschaft der in den Löchern vorliegenden Objekte von einer oder beiden Seiten der Lochscheibe detektierbar ist. Auf diese Weise können die Objekte von einer oder beiden Seiten untersucht werden. Messergebnisse der Detektionsvorrichtung können beispielsweise einer Auswertungsvorrichtung zugeführt werden, die durch einen Algorithmus entscheiden kann, ob das detektierte Objekt die gewünschte Eigenschaft hat, also beispielsweise für weitere Versuche geeignet ist oder nicht. Unbrauchbare Objekte können beispielsweise in einer Vorsortierung in ein Ausschuss-Behältnis überführt werden. Jene Objekte, für die die Auswertung ergibt, dass sie ein oder mehrere gewünschte Eigenschaften haben, können in ein Zielbehältnis befördert werden, dass beispielsweise eine Mikrotiterplatte, eine Petrischale o. ä. sein kann. Das Zielbehältnis kann durch einen Träger gehalten werden, mit dem es Hinrichtungen parallel zur Lochscheibe verfahrbar ist.

In einer vorteilhaften Ausgestaltung kann die Optik einen ersten und zweiten Spiegel aufweisen, die bezüglich der Durchgangslöcher einander gegenüberliegend angeordnet sind. Der erste und der zweite Spiegel können dabei von einer Durchgangsachse der Durchgangslöcher geschnitten werden. Der erste Spiegel kann gegenüber der Lochscheibe um +45° geneigt sein und der zweite Spiegel kann gegenüber der Lochscheibe um -45° geneigt sein. Vorteilhafterweise kann die Optik außerdem einen dritten Spiegel aufweisen, der von einer Ebene geschnitten wird, in der sich die Lochscheibe erstreckt. Der dritte Spiegel kann vorteilhaft gegenüber dieser Ebene um plus oder minus 45° geneigt sein, wiederum gemessen zwischen der besagten Ebene und der reflektierenden Fläche des dritten Spiegels. Der dritte Spiegel ist dann im Strahlengang von Lichtstrahlen angeordnet, die die Durchgangslöcher in Richtung deren Längsachse durchtreten und vom ersten oder zweiten Spiegel reflektiert werden.

In einer vorteilhaften Weiterbildung kann die Detektionsvorrichtung eine Beleuchtungsvorrichtung aufweisen, mit der Licht einer oder mehrerer Wellenlängen erzeugbar und auf in den Durchgangslöchern vorliegende Objekte einstrahlbar ist. Insbesondere können vorteilhafterweise mit der Beleuchtungsvorrichtung ein oder mehrere Anregungswellenlängen erzeugbar sein, so dass eine fluoreszenzbasierte Bilddetektion möglich ist. Die Anregungswellenlängen können dazu auf fluoreszierendes Material der Objekte angepasst sein. Die Belichtungsvorrichtung kann vorteilhafterweise an der Position eines der beschriebenen Spiegel angeordnet sein. Auf diese Weise wird das Objekt in dem entsprechenden Durchgangsloch von einer Seite durch die Detektionsvorrichtung beobachtbar, während es von der gegenüberliegenden Seite beleuchtbar ist. Es wird so also eine durchlichtbasierte (Bild-) Detektion möglich.

Die Optik kann außerdem eine Kamera aufweisen, die eine Blickrichtung hat, die auf den dritten Spiegel gerichtet ist. Die Kamera kann dann im Strahlengang von Licht angeordnet sein, das von den Durchgangslöchern ausgeht, vom ersten oder zweiten Spiegel reflektiert wird, und dann durch den dritten Spiegel reflektiert wird, sodass es durch den dritten Spiegel in die Kamera reflektiert wird. Vorteilhafterweise kann die Blickrichtung der Kamera senkrecht auf der Ebene der Lochscheibe stehen. Die beschriebene Anordnung von Spiegeln und Kamera erzeugt in der Kamera eine Überlagerung der Ansichten des Objekts von den gegenüberliegenden Seiten. Auf diese Weise lässt sich das Objekt in dem Durchgangsloch mit einer Kamera von beiden Seiten gleichzeitig beobachten.

In einer vorteilhaften Ausgestaltung kann die Kamera ein Filtersystem aufweisen, das gerade jene Wellenlängen passieren lässt, die in der Fluoreszenz erzeugt werden, wenn, wie oben beschrieben, Objekte zur Fluoreszenz angeregt werden.

Vorteilhafterweise kann die Handhabungsvorrichtung eine Abstreiflippe aufweisen, die auf der Lochscheibe in einem Abstandsbereich von der Lochscheibendrehachse aufliegt, in dem die Durchgangslöcher angeordnet sind, wobei die Abstreiflippe in Drehrichtung der Lochscheibe vor der Detektionseinrichtung angeordnet ist. Vorteilhaft kann je eine Abstreiflippe auf beiden Seiten der Lochscheibe aufliegen. Die jeweilige Abstreiflippe kann vorteilhafterweise gegenüber der zur Lochscheibendrehachse radialen Richtung in einem Winkel größer als Null stehen, so dass Flüssigkeit auf der Lochscheibe beim Drehen der Lochscheibe zum Rand der Lochscheibe geleitet wird. Durch diese Abstreiflippen wird erreicht, dass keine Flüssigkeit in die Detektionsvorrichtung gelangt. Vorteilhafterweise können die Abstreiflippen Gummilippen sein.

Erfindungsgemäß weist die Handhabungsvorrichtung zumindest im Bereich der Detektionsvorrichtung auf einer oder beiden Seiten der Lochscheibe eine transparente Platte, z.B. eine Glasplatte oder eine Acrylglasplatte auf, welche die Durchgangslöcher in diesem Bereich abdeckt und unmittelbar an der Lochscheibe anliegt, so dass sie die Durchgangslöcher verschließt. Vorteilhafterweise ist eine solche Platte auf beiden Seiten der Lochscheibe angeordnet, so dass die beiden Platten einander bezüglich der Lochscheibe gegenüberliegen. Vorteilhafterweise ist die eine oder sind die zwei Platten so angeordnet, dass die Detektion der Objekte durch die Platten hindurch erfolgt. Die Detektionsvorrichtung kann also gerade auf die eine oder zwei Platten gerichtet sein. Die eine oder zwei Platten sind dabei fest gegenüber der Detektionsvorrichtung, so dass sich die Lochscheibe zwischen den Platten hindurchbewegt. Derartige Platten bewirken in den Durchgangslöchern einen definierten Flüssigkeitsfilm zwischen den Platten bzw. zwischen Platte und Objekt. Hierdurch wird verhindert, dass der Flüssigkeitsfilm eine Verzerrung, beispielsweise aufgrund von Meniskusbildung, in der Detektion erzeugt.

In einer vorteilhaften Ausgestaltung der Erfindung kann die Handhabungsvorrichtung außerdem eine Druckluftdüse aufweisen, die in jenem Abstand von der Lochscheibenachse auf die Lochscheibe gerichtet ist, in dem die Durchgangslöcher angeordnet sind, und die vorzugsweise auf jener Seite der Lochscheibe angeordnet ist, die der Barriere abgewandt ist. Dass die Druckluftdüse auf die Lochscheibe gerichtet ist, bedeutet dabei, dass ein aus der Druckluftdüse auftretender Luftstrahl auf die Lochscheibe trifft. Vorteilhafterweise kann eine Öffnung der Düse parallel liegen zu der der Düse zugewandten Öffnung des entsprechenden Durchgangslochs und/oder zur Oberfläche der Lochscheibe. Eine Austrittsrichtung der Düse kann vorteilhaft senkrecht auf jener der Düse zugewandten Oberfläche des entsprechenden Durchgangslochs und/oder der Lochscheibe stehen und/oder koaxial zur Durchgangsrichtung des entsprechenden Lochs stehen, wenn sich das entsprechende Loch gerade vor der Düsenöffnung befindet.

In einer vorteilhaften Ausgestaltung der Erfindung kann die Handhabungsvorrichtung einen Träger für eine Mikrotiterplatte aufweisen, der bezüglich der Lochscheibe der Druckluftdüse gegenüber angeordnet ist, sodass Druckluftdüse in Richtung der Mikrotiterplatte gerichtet ist. Die Lochscheibe ist also zwischen der Druckluftdüse und der Mikrotiterplatte angeordnet. Mikrotiterplatten weisen im allgemeinen eine Vielzahl von Kavitäten auf, die sich in einer Oberfläche der Mikrotiterplatte öffnen. Durch Druckluft aus der Druckluftdüse können in dieser Anordnung Objekte aus jenem der Durchgangslöcher in eine Kavität der Mikrotiterplatte bewegt werden, das sich gerade zwischen der Druckluftdüse und der entsprechenden Kavität befindet. Vorzugsweise ist dabei ein Durchmesser der Durchgangslöcher kleiner oder gleich einem Durchmesser der Kavitäten der Mikrotiterplatte (normalerweise haben alle Kavitäten den gleichen Durchmesser). Vorteilhafterweise ist natürlich der Durchmesser der Durchgangslöcher größer als der Durchmesser der Objekte.

Vorzugsweise ist mit dem Träger die Mikrotiterplatte so haltbar, dass jene die Kavitäten aufweisen Oberfläche, also jede Oberfläche, in die die Kavitäten eingebracht sind, parallel liegt zur Lochscheibe. Darüber hinaus ist vorzugsweise mit dem Träger die Mikrotiterplatte in Richtungen parallel zu der die Kavitäten aufweisenden Oberfläche der Mikrotiterplatte und/oder zur Lochscheibe verschiebbar. Auf diese Weise kann mit dem Träger die Mikrotiterplatte so bewegt werden, dass unterschiedliche Kavitäten der Düsenöffnung gegenüber liegen.

In einer vorteilhaften Ausgestaltung der Erfindung kann die Handhabungsvorrichtung außerdem eine Positioniervorrichtung aufweisen, mit der der Träger aus einer Einlegeposition in eine Bestückungsposition verschiebbar ist. In der Bestückungsposition ist die Mikrotiterplatte mit zur Lochscheibe paralleler die Kavitäten aufweisender Oberfläche haltbar. Der Träger kann vorteilhafterweise durch die Positioniervorrichtung zwischen Einlege- und Bestückungsposition hin und her bewegt werden. Der Pfad dieser Bewegung kann dabei durch die Positioniervorrichtung vorgegeben sein. Es ist vorteilhaft möglich, dass die Mikrotiterplatte, die in dem Halter gehalten wird, bei ihrer Bewegung entlang des Pfades rotiert. Es kann also ein Winkel zwischen einer Oberfläche der Mikrotiterplatte, die die Kavitäten aufweist, und der Lochscheibe oder einem Flüssigkeitsspiegel sich entlang des Pfades verändern.

In der Einlegeposition kann die Mikrotiterplatte vorteilhafterweise derart haltbar sein, dass die Oberfläche, die die Kavitäten aufweist, horizontal, also parallel zum Flüssigkeitsspiegel in der Wanne, ausgerichtet ist. In der Bestückungsposition ist die Mikrotiterplatte derart haltbar, dass die Oberfläche, die die Kavitäten aufweist, parallel zur Lochscheibe ausgerichtet ist, sodass die Objekte aus den Durchgangslöchern in die Kavitäten der Mikrotiterplatte gefüllt werden können.

In besonders vorteilhaften Ausgestaltungen ist die Mikrotiterplatte mit dem Träger in der Bestückungspositon auch parallel zur Lochscheibe verschiebbar. Eine derartige Verschiebung kann beispielsweise auch mit der Positioniereinrichtung selbst möglich sein.

Die Erfindung betrifft außerdem ein Verfahren zur Dispensierung von Objekten in eine Mikrotiterplatte. Dabei wird eine Handhabungsvorrichtung verwendet, die wie vorstehend beschrieben ausgestaltet ist und insbesondere Detektionsvorrichtung und die Druckluftdüse gegenüber der Mikrotiterplatte aufweist. Werden dabei die Objekte mit der Handhabungsvorrichtung der Flüssigkeit entnommen, in der die Objekte suspendiert sind. Dies erfolgt dadurch, dass die Flüssigkeit aktiv durch jene Durchgangslöcher bewegt wird, die sich gerade in der Flüssigkeit befinden. Hierdurch werden die Objekte in die Durchgangslöcher bewegt. Durch Drehen der Lochscheibe werden dann die Objekte zu der Detektionsvorrichtung bewegt. Mit der Detektionsvorrichtung wird dann zumindest eine Eigenschaft der Objekte detektiert. Die Objekte werden dann mit der Lochscheibe weiter bewegt bis zur Druckluftdüse, wo sie in Abhängigkeit von einem Wert der detektieren Eigenschaft in die Mikrotiterplatte bewegt werden oder nicht in die Mikrotiterplatte bewegt werden. Hierdurch können die Objekte anhand der detektierten Eigenschaft sortiert werden.

Vorteilhafterweise wird die Mikrotiterplatte so verschoben, nachdem ein Objekt in eine Kavität befördert wurde, dass sich eine andere, leere, Kavität der Düse gegenüber befindet. Auf diese Weise können die Kavitäten nacheinander mit Objekten befüllt werden. Verfolgt man den Ablauf für ein Objekt, so stellt sich dieser wie folgt dar. Zunächst wird das Objekt durch die Flüssigkeit in eines der Durchgangslöcher bewegt. Das Objekt wird dann durch Drehen der Lochscheibe zur Detektionsvorrichtung bewegt. Die Detektionsvorrichtung detektiert zumindest eine Eigenschaft des Objektes, anhand derer das Objekt zu sortieren ist. Durch weiteres drehen der Lochscheibe wird das Objekt von der Detektionsvorrichtung zu der Luftdruckdüse bewegt. Hat das Objekt eine vorgegebene Solleigenschaft, so erzeugt die Luftdruckdüse einen Luftstoß zu jenem Zeitpunkt, zu dem das Objekt die Luftdruckdüse passiert. Das Objekt wird hierdurch also in eine Kavität der Mikrotiterplatte bewegt. Hat das Objekt nicht die vorgegebene Eigenschaft, so kann eine weitere Düse vorgesehen sein, die das Objekt aus der Durchgangsöffnung entfernt, sobald das Objekt diese weitere Düse passiert. Auch hierzu kann die weitere Düse einen Luftstoß erzeugen. Vorteilhaft kann das Objekt in ein anderes Gefäß überführt werden, z.B. ein Falcontube.

Vorteilhafterweise können die Objekte makroskopischer Organismen sein, wie beispielsweise Fischeier. Die Lochscheibe kann vorzugsweise eine Glasscheibe sein oder Glas aufweisen, wodurch die Beleuchtung der Objekte verbessert wird.

Die Automatisierte Ablage von Objekten, wie zum Beispiel makroskopischen Organismen in eine Mikrotiterplatte besitzt gegenüber dem Stand der Technik erhebliche Vorteile:
- Die Erfindung ermöglicht die schonende Ablage von makroskopischen Organsimen in eine automatisch verfahrbare Mikrotierplatte, oder ein anderes Probengefäß
- Durch die direkte und schnelle Überführung der Organismen aus der Scheibe in die Mikrotiterplatte ist das System Hochdurchsatztauglich
- Durch die vorteilhafte 45°-Schrägstellung der Mikrotiterplatte ist unter anderem eine vorgelagerte Befüllung der Kavitäten mit Nährmedium möglich.
- Der Druckluftimpuls kann individuell auf die Organismusgröße eingestellt werden.
- Das System beinhaltet keine engen Kanalstrukturen oder Schläuche worin sich die Organismen festsetzen können und somit das System verstopfen .
- Weiterhin können die beiden Hauptkomponenten des Systems sehr einfach zerlegt und gereinigt werden, was zum einen steriles Arbeiten und zum anderen den Wechsel zwischen unterschiedlichen Organismen erleichtert.
- Durch die Verwendung unterschiedlicher Scheiben können verschieden große Organismen klassifiziert und vereinzelt werden.
- Durch die optische Detektionseinheit können Vorder- und Rückseite der Organismen in einem Bild aufgenommen und analysiert werden.
- Das Einspannen und der Wechsel des Pumpenschlauchs ist sehr einfach realisierbar, da die reinigbare Wanne zusätzlich als Pumpengehäuse agiert.

Im Folgenden soll die Erfindung anhand einiger Figuren beispielhaft erläutert werden. Dabei können die in den Beispielen gezeigten Merkmale auch unabhängig vom konkreten Beispiel realisiert sein und unter den Beispielen kombiniert werden. Gleiche Bezugszeichen kennzeichnen gleiche oder entsprechende Merkmale.

Es zeigt:
- Figur 1:: eine perspektivische Ansicht einer erfindungsgemäßen Handhabungsvorrichtung,
- Figur 2:: eine Rückseitenansicht der erfindungsgemäßen Handhabungsvorrichtung,
- Figur 3:: einen Schnitt durch die erfindungsgemäße Handhabungsvorrichtung,
- Figur 4:: eine Detailansicht aus Figur 3,
- Figur 5:: eine Seitenansicht der erfindungsgemäßen Handhabungsvorrichtung
- Figur 6:: eine Detailansicht einer Anordnung von Luftdruckdüse und Mikrotiterplatte, und
- Figur 7:: ein Beispiel einer Detektionsvorrichtung,
- Figur 8:: eine Seitenansicht einer Positioniervorrichtung, in der sich der Träger in einer Bestückungsposition befindet,
- Figur 9:: eine Seitenansicht der Positioniervorrichtung, in der sich der Träger zwischen der Bestückungsposition und der Einlegeposition befindet,
- Figur 10:: eine Seitenansicht der Positioniervorrichtung, in der sich der Träger in der Einlegeposition befindet.

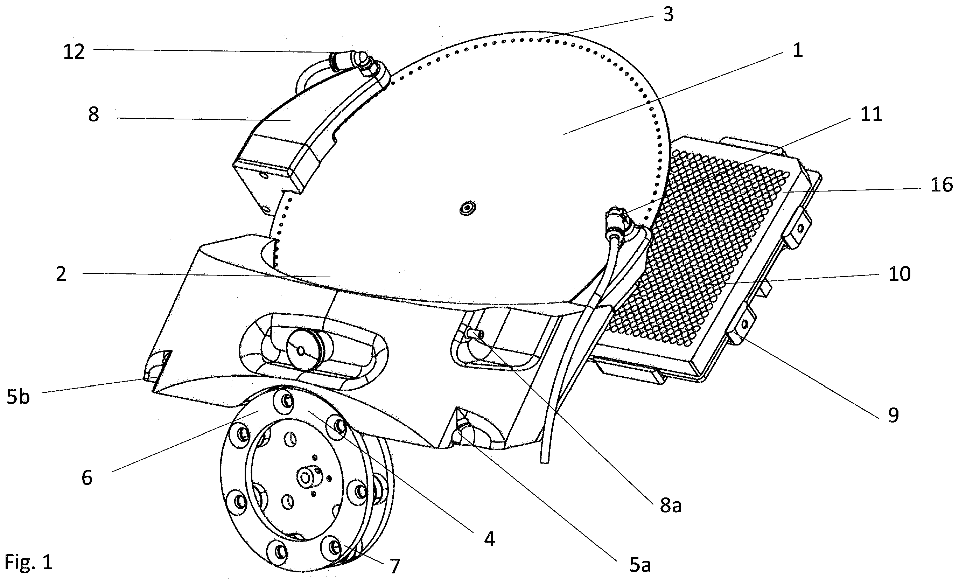

Figur 1 zeigt eine perspektivische Ansicht einer erfindungsgemäßen Handhabungsvorrichtung. Die Handhabungsvorrichtung weist eine Wanne 2 auf, die zur Aufnahme einer Objekte enthaltenden Suspension beginnt. Die Handhabungsvorrichtung weist außerdem eine kreisförmige Lochscheibe 1 auf, die um eine Lochscheibendrehachse drehbar ist. Die Lochscheibendrehachse hier eine Achse im mathematischen Sinne, die senkrecht im Mittelpunkt der Lochscheibe auf der Lochscheibe 1 steht. Die Lochscheibe 1 weist entlang ihres Umfangs eine Vielzahl von Durchgangslöchern 3 auf, die sich durch die Lochscheibe 1 hindurch erstrecken. Die Lochscheibe 1 kann beispielsweise eine Glasscheibe sein.

Die Lochscheibe 1 ragt teilweise in die Wanne 2 hinein, sodass sich ein Teil der Durchgangslöcher 3 in der Wanne befinden. Im gezeigten Beispiel wird die Wanne 2 nach oben durch eine kreissegmentförmige Öffnung begrenzt, deren Rand in einer Ebene verläuft. Die Lochscheibe schneidet in diesem Beispiel dieser Ebene. Die Lochscheibe 1 steht dabei zu der besagten Ebene in einem Winkel von 45°. Bei bestimmungsgemäßer Benutzung der Handhabungsvorrichtung wird sich der Flüssigkeitsspiegel im wesentlichen parallel zu dieser Ebene erstrecken. Das bedeutet, dass bei bestimmungsgemäßer Benutzung die Lochscheibe 1 ebenfalls in einem Winkel von 45° zu dem Flüssigkeitsspiegel steht. Es kommt dabei nicht auf den genauen Wert des Winkels an. Vorteilhaft ist es aber, wenn der Flüssigkeitsspiegel und die Lochscheibe 1 einen stumpfen Winkel einschließen, da hierdurch zum einen verhindert wird, dass die Objekte aus den Durchgangslöchern 3 herausfallen und zum anderen verhindert wird, dass die Flüssigkeit über die Lochscheibe 1 ausläuft. Da die Objekte in vielen Fällen durch die Kapilarkraft in dem Durchgangsloch 3 gehalten werden, ist die Schrägstellung jedoch optional.

Die Durchgangslöcher 3 haben von der Lochscheibendrehachse alle den gleichen Abstand und haben alle jeweils den gleichen Abstand von ihren benachbarten Durchgangslöchern 3. Vom Rand der Lochscheibe 1 haben ebenfalls alle Durchgangslöcher 3 den gleichen Abstand. Die Lochscheibe 1 ist im gezeigten Beispiel im Bereich der Wanne 2 mit ihrem Rand in eine Innenwand der Wanne 2 versenkt, sodass die Durchgangslöcher 3 zur Innenwand der Wanne 2 einen geringeren Abstand haben als zum Rand der Lochscheibe 1. Auf diese Weise wird erreicht, dass die Durchgangslöcher 3 auch bei der geringen Füllständen der Suspension in der Wanne 2 noch mit Objekten befüllt werden können.

Die erfindungsgemäße Handhabungsvorrichtung weist außerdem eine Flüssigkeitstransportvorrichtung 4 auf, die eingerichtet ist, die Flüssigkeit in der Wanne aktiv durch jene Durchgangslöcher 3 zu befördern, die sich innerhalb der Wanne befinden, im gezeigten Beispiel also unterhalb der Kreissegmentförmigen Öffnung. Die Flüssigkeitstransportvorrichtung 4 weist im gezeigten Beispiel eine Kompressionsscheibe 6 auf, die entlang ihres Umfangs Kompressionselemente 7 enthält. Die Kompressionsscheibe 6 weist im gezeigten Beispiel sieben der Kompressionselemente 7 auf, die hier äquidistant entlang des Umfangs der Kompressionsscheibe 6 angeordnet sind. Die Kompressionselemente 7 werden dabei von 2 kreisringförmigen Elementen gehalten.

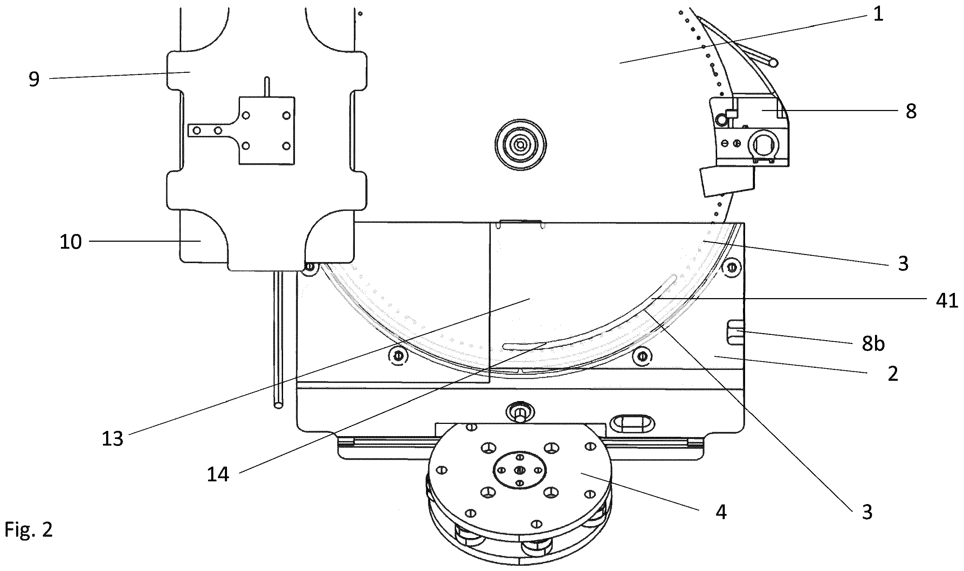

Die Flüssigkeitstransportvorrichtung 4 weist außerdem einen Flüssigkeitskanal auf, von dem sich ein Teilabschnitt zwischen zwei Öffnungen 5a und 5b an der Kompressionsscheibe 6 vorbei erstreckt. Die Kompressionsscheibe 6 greift mit den Kompressionselementen 7 in jenen Bereich ein, in dem der Flüssigkeitskanal zwischen den Öffnungen 5a und 5b verläuft. Hierdurch komprimieren die Kompressionselemente 7 den Flüssigkeitskanal. Die Kompressionsscheibe 6 ist um eine Drehachse drehbar, die mittig senkrecht auf jener Ebene steht, in der die Kompressionselemente 7 angeordnet sind. Durch diese Drehung bewegen sich die Kompressionselemente 7 nacheinander über den Flüssigkeitskanal hinweg und erzeugen in diesem dadurch einen peristaltischen Flüssigkeitstransport. Die Öffnungen 5a und 5b sind im gezeigten Beispiel über nicht eingezeichnete Abschnitte des Flüssigkeitskanals mit dem Inneren der Wanne 2 verbunden. In der perspektivischen Ansicht der Figur 1 ist dazu insbesondere die Öffnung 5a dem Anschluss 8a durch einen Abschnitt des Flüssigkeitskanal verbunden. Entsprechend ist die Öffnung 5b mit einem weiteren Anschluss 8b mit dem Inneren der Wanne 2 verbunden, der in Figur 2 zu erkennen ist.

Die Flüssigkeitstransportvorrichtung 4 kann vorteilhaft einen Kreislauf der Flüssigkeit bewirken. Auf diese Weise können die Objekte 15 in die Durchgangslöcher 3 bewegt werden, während der Flüssigkeitsstand in der Wanne 2 konstant bleibt.

Vorteilhafterweise kann der Flüssigkeitskanal ganz oder teilweise durch einen komprimierbaren Schlauch gebildet werden.

Die in Figur 1 gezeigt Handhabungsvorrichtung weist außerdem eine Detektionsvorrichtung 8 auf, die am Rand der Lochscheibe 1 so angeordnet ist, dass mit ihr zumindest eine Eigenschaft von in den Durchgangslöchern 3 der Lochscheibe 1 vorliegenden Objekten detektierbar ist. Die Detektionsvorrichtung 8 umgreift dabei den Rand der Lochscheibe 1.

Die Handhabungsvorrichtung weist außerdem einen Träger 9 für eine Mikrotiterplatte 10 auf. Der Träger 9 hält dabei die Mikrotiterplatte 10 so, dass deren Oberfläche, in die Kavitäten eingebracht sind, parallel liegt zur Fläche der Lochscheibe 1. Mit dem Träger 9 ist die Mikrotiterplatte 10 in Richtungen parallel zu dieser Fläche verschiebbar.

Die Handhabungsvorrichtung weist darüber hinaus außerdem eine Druckluftdüse 11 auf, die auf die Durchgangslöcher 3 in der Lochscheibe 1 gerichtet ist und der gegenüber die Mikrotiterplatte 10 angeordnet ist. Durch die Druckluftdüse 11 ist ein Luftstoß erzeugbar, mit dem in den Durchgangslöchern 3 vorliegende Objekte in eine Kavität der Mikrotiterplatte 10 dispensiert werden können.

In der in Figur 1 gezeigten Ansicht wird sich im Betrieb der Handhabungsvorrichtung die Lochscheibe 1 im Uhrzeigersinn drehen, sodass zunächst in der Wanne 2 Objekte in die Durchgangslöcher 3 eingebracht werden und diese dann zu der Detektionsvorrichtung 8 transportiert werden. In der Detektionsvorrichtung 8 kann ein oder mehrere Eigenschaften der Objekte detektiert werden. Objekte, die gewünschte Eigenschaften haben können dann durch weiteres drehen der Lochscheibe 1 bis zur Druckluftdüse 11 bewegt werden und durch diese mit einem Luftstoß in eine Kavität der Mikrotiterplatte 10 dispensiert werden. Der Zeitpunkt, zu dem der Luftstoß durch die Düse 11 erzeugt werden muss lässt sich einfach aus dem Zeitpunkt der Detektion und der Winkelgeschwindigkeit der Lochplatte 1 berechnen.

Im in Figur 1 gezeigten Beispiel weist die Handhabungsvorrichtung eine weitere Druckluftdüse 12 auf, die entlang des Umfangs der Lochscheibe 1 zwischen der Detektionsvorrichtung 8 der Druckluftdüse 11 angeordnet ist. Durch diese Druckluftdüse 12 können Objekte, die nicht die gewünschte Eigenschaft haben, bereits vor dem Erreichen der Druckluftdüse 11 und der Mikrotiterplatte 10 aus den Durchgangsöffnungen 3 entfernt werden.

Figur 2 zeigt die Rückseite der in Figur 1 gezeigten Handhabungsvorrichtung. Dabei ist eine Rückseite Wand der Wanne 2 transparent ausgestaltet, um die Anordnung der Barriere 13 erkennbar zu machen. Die Barriere 13 ist hierbei als Barrierescheibe 13 ausgestaltet, die zur Lochscheibe 1 parallel angeordnet ist und von der Lochscheibe 1 einen Abstand hat, der kleiner ist als der Durchmesser der Durchgangslöcher 3. Die Barriere 13 weist außerdem ein Langloch 14 auf, dass die Barrierescheibe 13 durchstößt und parallel zum Rand der Lochscheibe 1 verläuft. Dabei hat das Langloch 14 einen Abstand zur Lochscheibendrehachse, der ungleich dem Abstand der Durchgangslöcher 3 von der Lochscheibendrehachse ist. Im gezeigten Beispiel ist der Abstand des Langloch 14 von der Lochscheibendrehachse etwas kleiner als der Abstand der Durchgangslöcher 3 von der Lochscheibendrehachse.

Die in Figur 2 gezeigte Barriere 13 ist hinter den Durchgangslöchern 3 angeordnet, die sich in der Wanne 2 befinden und so ausgestaltet, dass sie ein Austreten der Objekte aus den Durchgangslöchern 3 in Richtung der Barriere 13 verhindert, aber ein Durchtreten der Flüssigkeit durch zumindest einen Teil der Durchgangslöcher 3, die sich in der Wanne 2 befinden, in Richtung der Barriere 13 erlaubt. Um das Durchtreten der Flüssigkeit zu ermöglichen, kann die Barrierescheibe 13 von der Lochscheibe 1 einen Abstand größer als Null haben.

Die Barriere 13 und die Lochscheibe 1 trennen die Wanne 2 von einem abflussbereich 41. Durch die Flüssigkeitstransportvorrichtung ist die Flüssigkeit aktiv von der Wanne 2 durch die Durchgangslöcher 3 hindurch und durch das Langloch 14 hindurch in den Abflussbereich 41 beförderbar. Der Flüssigkeitskanal ist mit dem Abflussbereich 41 verbunden, sodass Flüssigkeit aus dem Abflussbereich 41 gesaugt werden kann. Der Flüssigkeitskanal ist darüber hinaus mit seinem anderen Ende über den Anschluss 8a mit der Wanne 2 verbunden, sodass die Flüssigkeit durch den Flüssigkeitskanal in die Wanne 2 bewegbar ist.

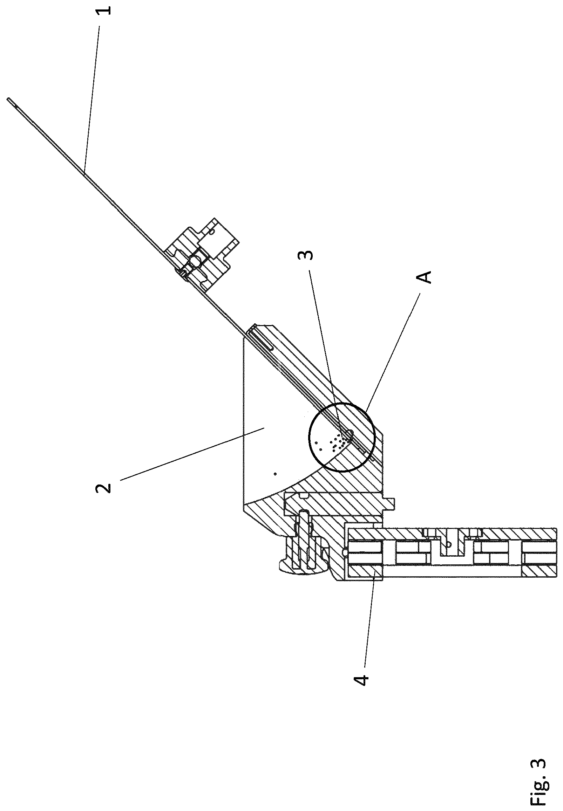

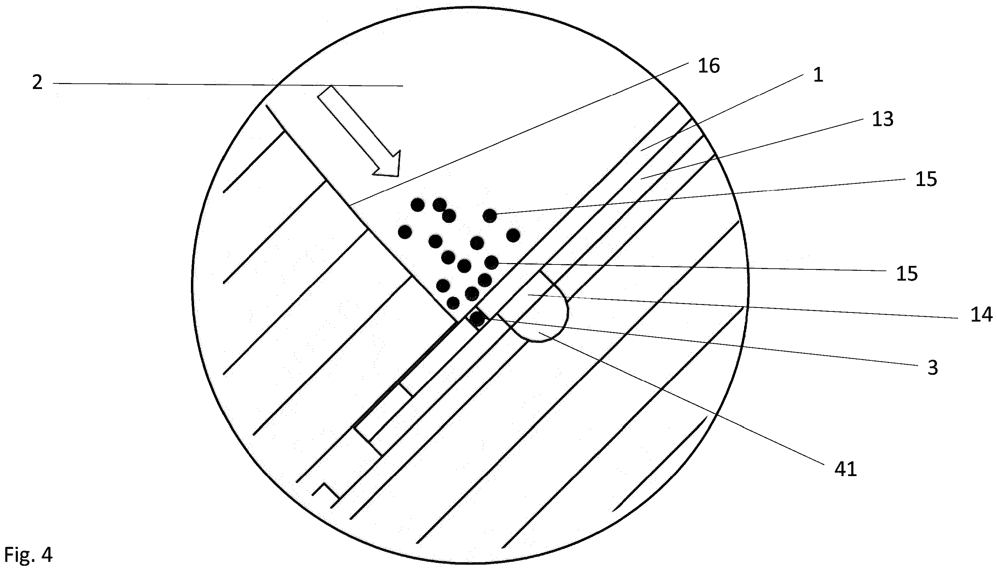

Die Figuren 3 und 4 zeigen einen Schnitt durch die erfindungsgemäße Handhabungsvorrichtung wie Figur 1 gezeigt im Bereich eines der Durchgangslöcher 3. Dabei zeigt Figur 4 eine Detailansicht, die in Figur 3 mit A gekennzeichnet ist.

Es ist zu erkennen, dass die Lochscheibe 1 mit ihrem Rand in eine Ausnehmung in der Wand 16 der Wanne 2 hineinragt und die Wanne 2 begrenzt. Hierdurch befinden sich die Durchgangslöcher 3 dicht an der Wand 16 der Wanne 2. Die Objekte 15 werden durch die Gravitationskraft nach unten bewegt, sodass sie sich in einem Bereich sammeln, der einerseits durch die Innenwand 16 der Wanne 2 und andererseits durch die Lochscheibe 1 begrenzt wird. Durch die aktive Bewegung der Flüssigkeit werden die Objekte 15 in die Durchgangslöcher 3 gesogen. Vorteilhafterweise sind die Durchgangslöcher 3 so bemessen, dass gerade genau eines der Objekte 15 darin Platz findet.

Auf jener der Wanne 2 abgewandten Seite der Lochscheibe 1 ist die Barriere 13, die hier als Scheibe 13 ausgestaltet ist, angeordnet. Wie zu Figur 2 beschrieben weist die Barriere 13 ein Langloch 14 auf, dass einen anderen Abstand zur Lochscheibendrehachse hat, als die Durchgangslöcher 3. Auf jener der Wanne 2 abgewandten Seite der Lochscheibe 1 und der Barriere 13 befindet sich der Abflussbereich 41, der hier als Rinne ausgestaltet ist, die durch das Langloch 14 begrenzt wird und durch dieses fortgesetzt wird.

Eine Dicke der Lochscheibe 1 und der der Barriereplatte 13 kann insbesondere vorteilhaft an die Abmessungen der zu handhabenden Objekte 15 angepasst werden. Zur Handhabung von Objekten mit größeren Durchmessern können die Lochscheibe 1 und die Barriereplatte 13 dicker gewählt werden und es können größere Durchgangslöcher 3 darin eingebracht werden.

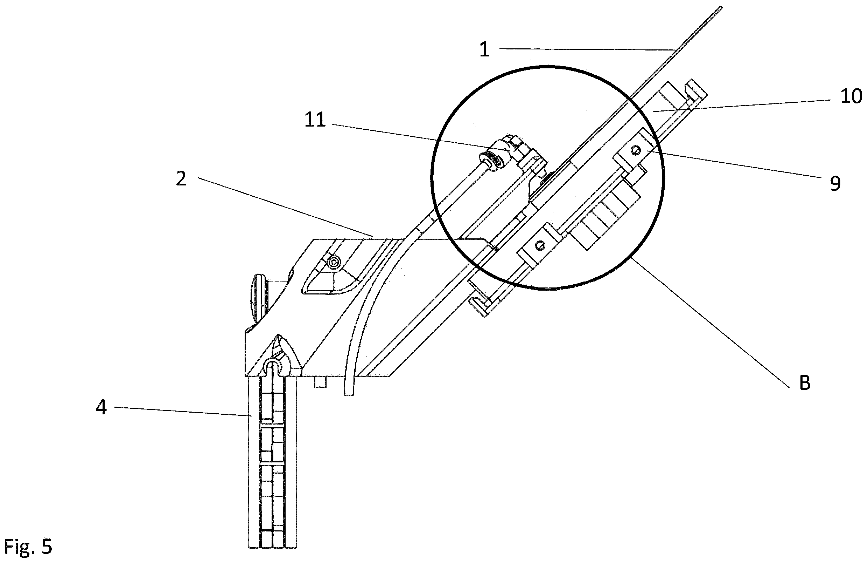

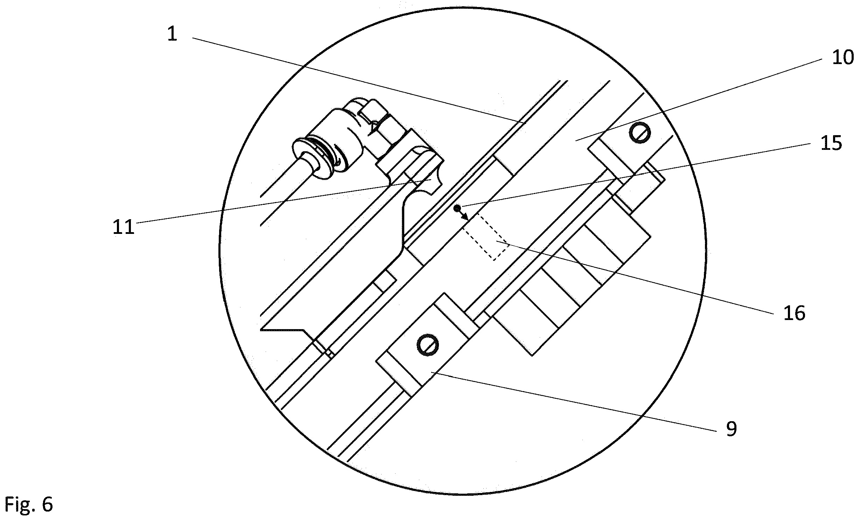

Die Figuren 5 und 6 zeigen eine Seitenansicht des Beispiels der Erfindung gemessen Handhabungsvorrichtung, in der die Anordnung der Druckluftdüse 11 gegenüber der Mikrotiterplatte 10 Zu erkennen ist. Dabei zeigt Figur 6 eine Detailansicht, die in Figur 5 mit B gekennzeichnet ist.

Die Druckluftdüse 11 ist der Mikrotiterplatte 10 bezüglich der Lochscheibe 1 gegenüber angeordnet. Dabei ist die Ausstoßrichtung der Druckluftdüse 11 auf die Lochscheibe 1 gerichtet, sodass einen Luftstoß in Richtung der Mikrotiterplatte 10 aus der Druckluftdüse 11 erzeugbar ist. Setzt man die Richtung, in der aus der Druckluftdüse 11 Luft ausstoßbar ist, als Gerade fort, so verläuft diese Gerade zunächst im Abstand der Durchgangslöcher 3 durch die Lochscheibe 1 und dann durch die Mikrotiterplatte 10. Die Druckluftdüse 11 kann so steuerbar sein, dass immer genau dann ein Luftstoß erzeugt wird, wenn eines der Durchgangslöcher 3 auf der genannten Geraden befindet, in dem ein Objekt 15 angeordnet ist, dass in einer Kavität 16 der Mikrotiterplatte 10 abgelegt werden soll. Durch den Träger 9 ist die Mikrotiterplatte 10 so verschiebbar, dass sich gerade jene Kavität 16 auf der genannten geraden befindet, in die das Objekt 15 abgelegt werden soll. Vorteilhafterweise kann stets genau ein Objekt 15 in einer Kavität 16 abgelegt werden. Für das nächste Objekt wird dann die Lochscheibe ein weitergedreht und die Mikrotiterplatte 10 so verschoben, dass sich eine andere Kavität 16 in der genannten Geraden befindet.

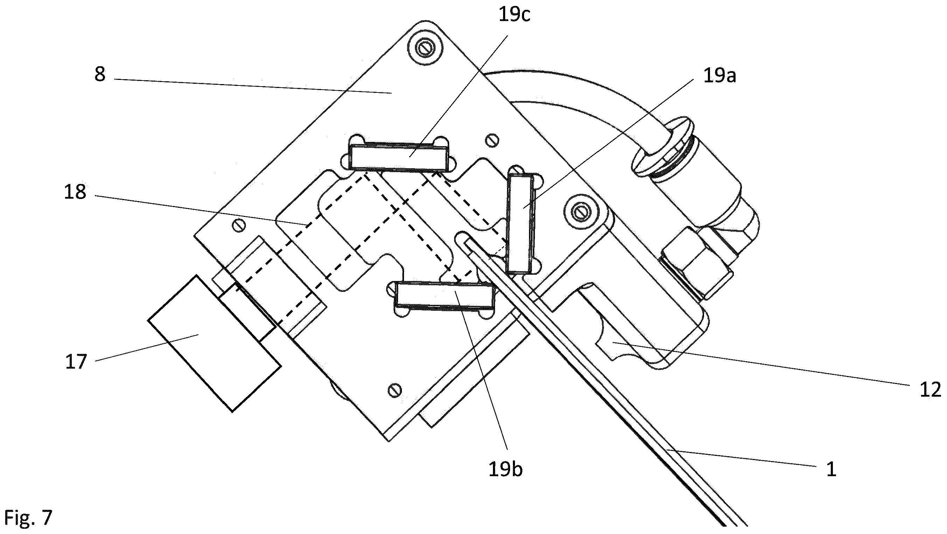

Figur 7 zeigt eine beispielhafte Ausgestaltung der Detektionsvorrichtung 8 als optische Detektionsvorrichtung. Die Detektionsvorrichtung 8 weist dabei einen ersten Spiegel ab 19a auf, der gegenüber einer Ebene, in der sich die Lochscheibe 1 erstreckt, um 45° geneigt ist, gemessen zwischen der reflektierenden Oberfläche des Spiegels 19a und der besagten Ebene. Dabei ist die reflektierende Oberfläche der Lochscheibendrehachse abgewandt. Die Detektionsvorrichtung 8 weist außerdem einen zweiten Spiegel 19b auf, der gegenüber der Ebene, in der sich die Lochscheibe 1 erstreckt um einen Winkel von minus 45° geneigt ist, wobei wiederum die reflektierende Oberfläche der Lochscheibendrehachse abgewandt ist. Die reflektierenden Oberflächen des ersten Spiegels 19a und des zweiten Spiegel 19b stehen also in einem Winkel von 90° zueinander. Die Detektionsvorrichtung 8 weist darüber hinaus einen dritten Spiegel 19 c auf, der durch die Ebene geschnitten wird, in der sich die Lochscheibe 1 erstreckt. Der dritte Spiegel 19 C ist gegenüber dieser Ebene um minus 135° geneigt, sodass seine reflektierende Oberfläche jener des zweiten Spiegel 19b zugewandt ist und zu dieser parallel liegt. Alle Spiegel 19a, 19b und 19c liegen bezüglich der Lochscheibendrehachse in der gleichen radialen Richtung. Ein Strahlengang 18 von Licht, dass von einem der Durchgangslöcher 3 in der Lochscheibe 1 ausgeht, ist Figur 7 gestrichelt dargestellt. Licht, das aus dem Durchgangsloch 3 in Richtung des ersten Spiegels 19a austritt, trifft in einem Winkel von 45° auf die reflektierende Oberfläche des ersten Spiegels 19a und wird von diesem auf den dritten Spiegel 19c reflektiert. Im gezeigten Beispiel verläuft der Strahlengang 18 zwischen dem ersten Spiegel 19a und den dritten Spiegel 19c parallel zur Ebene, in der sich die Lochscheibe 1 erstreckt. Licht, dass in Richtung des zweiten Spiegels 19b aus der Durchgangsöffnung 3 austritt, trifft auf die reflektierende Oberfläche des zweiten Spiegels 19b und wird von diesem ebenfalls in Richtung des dritten Spiegels 19c reflektiert. Im gezeigten Beispiel läuft der Strahlengang 18 auch zwischen dem zweiten Spiegel 19b und dem dritten Spiegel 19c parallel zur Ebene, in der sich die Lochscheibe 1 erstreckt.

Der dritte Spiegel 19c reflektiert nun das Licht, dass vom ersten Spiegel 19a kommt und nicht das vom zweiten Spiegel 19b kommt in Richtung einer Kamera 17, deren Blickrichtung im gezeigten Beispiel senkrecht auf der Ebene steht, in der sich die Lochscheibe 1 erstreckt. In der Kamera 17 werden auf diese Weise die Ansichten von Objekten 15 in der Durchgangsöffnung 3 von beiden Seiten der Lochscheibe 1 überlagert. Die Objekte 15 sind also in einem Schritt von beiden Seiten untersuchbar.

In den hier gezeigten Beispielen ist die optionale Druckluftdüse 12 zum Entfernen von Objekten in 15, die nicht die gewünschte Eigenschaft haben, baulich mit der Detektionsvorrichtung zusammengefasst. Eine derartige Anordnung ist selbstverständlich nicht erforderlich.

Die beschriebene Handhabungsvorrichtung kann besonders vorteilhaft modular ausgestaltet sein, sodass die Lochscheibe 1, die Wanne 2 und der Flüssigkeitskanal zu einem Modul gehören während die Flüssigkeitstransportvorrichtung 4 zu einem anderen Modul gehört. Auf diese Weise können die Lochscheibe ein und die Wanne 2 leicht getauscht und gereinigt werden, um zum Beispiel biologischen Hygienebestimmungen gerecht zu werden. Die beschriebene Barriere 13 kann ebenfalls Teil jenes Moduls sein, dessen Teil die Lochscheibe 1 ist.

Die erfindungsgemäße Vorrichtung ist besonders geeignet zum Sortieren von makroskopischen Organismen wie beispielsweise Fischeiern.

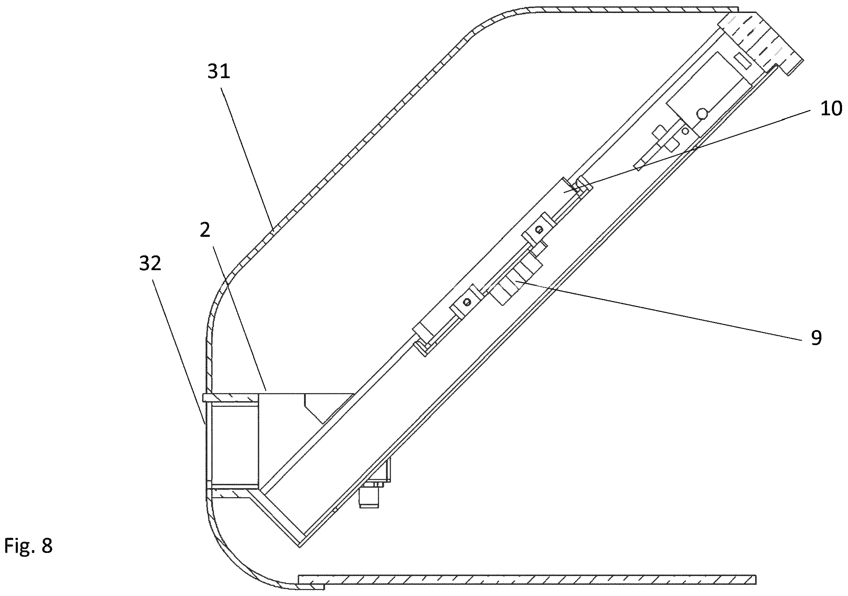

Die Figuren 8, 9 und 10 zeigen eine Seitenansicht einer Positioniervorrichtung einer vorteilhaften Ausgestaltung der Handhabungsvorrichtung. Mit der Positioniervorrichtung kann der Träger 9 aus einer Einlegeposition in eine Bestückungsposition bewegt werden. Die Positioniervorrichtung kann den Träger 9 vorteilhafterweise zwischen beliebigen Positionen, die sich auf einem Pfad zwischen Einlege- und Bestückungsposition befinden, hin und her bewegen. Die Handhabungsvorrichtung kann vorteilhafterweise von einem Gehäuse 31 umgeben sein, in dem sich eine Einbringöffnung 32 zum Einbringen einer Mikrotiterplatte 10 in das Gehäuse 31 befindet. Die Figuren 8, 9 und 10 zeigen den Träger in jeweils unterschiedlichen Position, in die der Träger 9 mittels der Positioniervorrichtung verschiebbar ist.

Die Figur 8 zeigt eine Seitenansicht der Positioniervorrichtung, in der sich der Träger 9 in der Bestückungsposition befindet. In der Bestückungsposition ist die Mikrotiterplatte 10 derart haltbar, dass jene Oberfläche der Mikrotiterplatte 10, die die Kavitäten aufweist, parallel zur Lochscheibe 1 ausgerichtet ist. Auf diese Weise können in der Bestückungsposition Objekte aus den Durchgangslöchern der Lochscheibe in die Kavitäten der Mikrotiterplatte 10 gefüllt werden.

In besonders vorteilhaften Ausgestaltungen ist die Mikrotiterplatte 10 mit dem Träger 9 in der Bestückungsposition auch parallel zur Lochscheibe 1 verschiebbar. Eine derartige Verschiebung kann beispielsweise mit der Positioniereinrichtung selbst möglich sein. Alternativ kann eine zusätzliche Vorrichtung vorgesehen sein, die den Träger 9 in der Bestückungsposition derart bewegen kann, dass Mikrotiterplatte 10 parallel zur Lochscheibe verschiebbar ist.

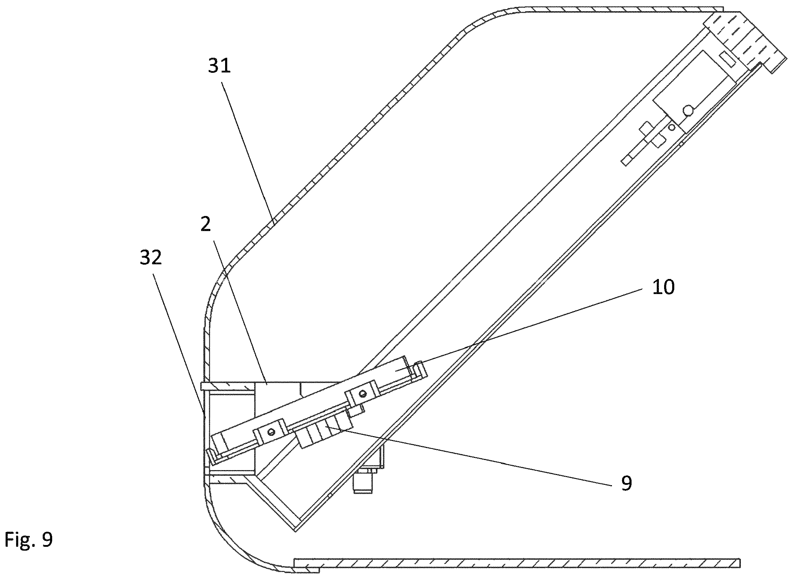

Figur 9 zeigt eine Seitenansicht der Positioniervorrichtung, in der sich der Träger 9 in einer Position befindet, die sich auf einem Pfad zwischen Bestückungsposition und der Einlegeposition befindet. Im Vergleich zu Figur 8, in der sich der Träger 9 in der Bestückungsposition befindet, wird deutlich, dass der Träger 9 entlang des Pfades rotieren kann. Ein Winkel, der zwischen der Oberfläche der Mikrotiterplatte 10, die die Kavitäten aufweist, und der Lochscheibe eingeschlossen ist, kann also entlang des Pfades veränderbar sein.

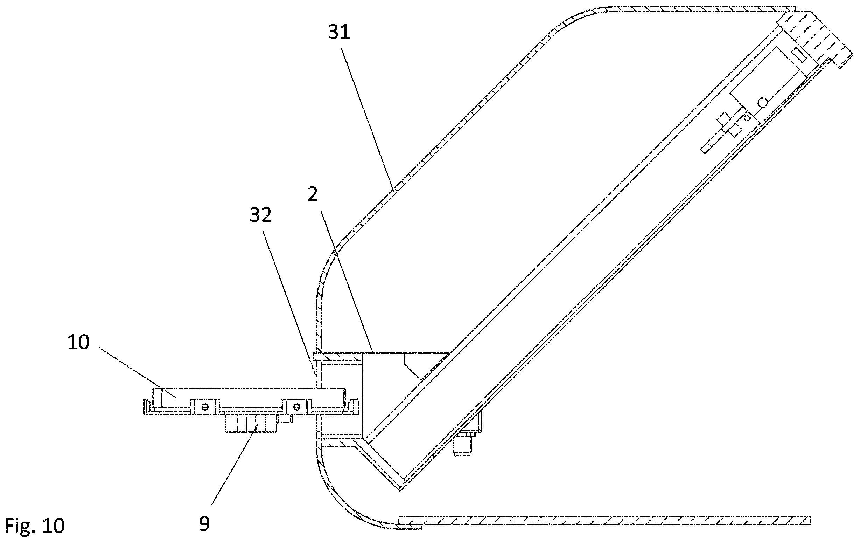

Figur 10 zeigt die Positioniervorrichtung in einer Seitenansicht, wobei sich der Träger 9 in der Einlegeposition befindet. In der Einlegeposition ist die Mikrotiterplatte 10 optional derart haltbar, dass die Oberfläche der Mikrotiterplatte 10, die die Kavitäten aufweist, horizontal ausgerichtet ist. Im gezeigten Ausführungsbeispiel der Handhabungsvorrichtung ist die Mikrotiterplatte 10 in der Einlegeposition zudem derart durch den Halter 9 haltbar, dass sie durch die Einbringöffnung 32 aus dem Gehäuse 31 herausragt. Dies kann ein einfaches Einbringen der Mikrotiterplatte 10 in die Handhabungsvorrichtung ermöglichen.

## Patentansprüche

1. Handhabungsvorrichtung zur Handhabung von Objekten, aufweisend eine Wanne zur Aufnahme einer die Objekte und eine Flüssigkeit enthaltenden Suspension,
eine Lochscheibe, die um eine Lochscheibendrehachse drehbar ist und die entlang ihres Umfangs eine Vielzahl an Durchgangslöchern aufweist, die sich durch die Lochscheibe hindurch erstrecken,
wobei die Lochscheibe teilweise in die Wanne so hineinragt, dass sich ein Teil der Durchgangslöcher in der Wanne befindet,
weiter aufweisend eine Barriere, die hinter zumindest jenen Durchgangslöchern angeordnet ist, die sich in der Wanne befinden,
wobei die Barriere so ausgestaltet ist, dass sie ein Austreten der Objekte aus den Durchgangslöchern in Richtung der Barriere verhindert aber ein Durchtreten der Flüssigkeit durch zumindest einen Teil der Durchgangslöcher, die sich in der Wanne befinden, in Richtung der Barriere erlaubt,
weiter aufweisend eine Flüssigkeitstransportvorrichtung, die eingerichtet ist, die Flüssigkeit aktiv durch jene Durchgangslöcher, die sich in der Wanne befinden, zu befördern, durch welche die Barriere das Durchtreten der Flüssigkeit erlaubt,
weiter aufweisend eine Detektionsvorrichtung, die am Rand der Lochscheibe so angeordnet ist, dass mit ihr zumindest eine Eigenschaft von in den Löchern der Lochscheibe vorliegenden Objekten detektierbar ist,
**dadurch gekennzeichnet dass**, die Handbabungsvorrichtung weiter eine oder zwei transparente Platten aufweist, welche die Durchgangslöcher zumindest in einem Bereich von einer oder beiden Seiten verschließen, **in** dem durch die Detektionsvorrichtung die zumindest eine Eigenschaft von in den Löchern vorliegenden Objekten detektierbar ist.

2. Handhabungsvorrichtung nach dem vorhergehenden Anspruch, wobei die Handhabungsvorrichtung einen Abflussbereich aufweist, der auf jener der Wanne gegenüberliegenden Seite der Lochscheibe und der Barriere so angeordnet ist, dass Flüssigkeit aus der Wanne durch zumindest einen Teil der Durchgangslöcher und durch die Barriere in den Abflussbereich fließen kann,
wobei die Flüssigkeitstransportvorrichtung einen Flüssigkeitskanal aufweist, der mit dem Abflussbereich so verbunden ist, dass die Flüssigkeit durch den Flüssigkeitskanal aus dem Abflussbereich saugbar ist und wobei der Flüssigkeitskanal außerdem mit der Wanne so verbunden ist, dass die Flüssigkeit durch den Flüssigkeitskanal in die Wanne bewegbar ist, wobei vorzugsweise der Flüssigkeitskanal einen Schlauch aufweist oder ein Schlauch ist.

3. Handhabungsvorrichtung nach dem vorhergehenden Anspruch, wobei die Flüssigkeitstransportvorrichtung außerdem eine drehbare Kompressionsscheibe aufweist, die entlang ihres Umfangs Kompressionselemente aufweist,
wobei die Kompressionsscheibe so angeordnet ist, dass sich die Kompressionselemente bei Drehung der Kompressionsscheibe am Flüssigkeitskanal vorbeibewegen und diese dabei komprimieren.

4. Handhabungsvorrichtung nach einem der beiden vorhergehenden Ansprüche, wobei die Wanne, die Lochscheibe, der Abflussbereich und der Flüssigkeitskanal Teil eines ersten Moduls sind und
wobei die Kompressionsscheibe Teil eines zweiten Moduls ist,
wobei das erste und das zweite Modul als Ganzes miteinander verbindbar und voneinander trennbar sind.

5. Handhabungsvorrichtung nach einem der vorhergehenden Ansprüche, wobei die Barriere eine Barrierescheibe aufweist oder ist, die zur Lochscheibe parallel angeordnet ist und die von der Lochscheibe einen Abstand kleiner als ein Durchmesser der Durchgangslöcher hat,
wobei die Barrierescheibe ein Langloch aufweist, das die Barrierescheibe durchstößt und parallel zu einem Rand der Lochscheibe mit einem Abstand zur Lochscheibendrehachse verläuft, der ungleich dem Abstand der Durchgangslöcher von der Lochscheibendrehachse ist.

6. Handhabungsvorrichtung nach dem vorhergehenden Anspruch, wobei der Abflussbereich eine Rinne ist, die entlang des Langlochs der Barrierescheibe verläuft und sich in das Langloch öffnet, wobei vorzugsweise das Langloch und die Rinne eine gleiche Länge haben.

7. Handhabungsvorrichtung nach einem der vorhergehenden Ansprüche, wobei die Lochscheibe gegenüber einem Flüssigkeitsspiegel der Flüssigkeit in der Wanne bei bestimmungsgemäßer Benutzung um einen Winkel von größer als 90°, vorzugsweise größer oder gleich 120° und/oder weniger als 180°, vorzugsweise weniger oder gleich 150° geneigt ist, besonders bevorzugt um 135° geneigt ist, gemessen oberhalb des Flüssigkeitsspiegels.

8. Handhabungsvorrichtung nach einem der vorhergehenden Ansprüche, wobei die Detektionsvorrichtung den Rand der Lochscheibe umgreift und eine Optik aufweist, mit der die zumindest eine Eigenschaft der in den Löchern vorliegende Objekte von beiden Seiten der Lochscheibe detektierbar ist.

9. Handhabungsvorrichtung nach dem vorhergehenden Anspruch, wobei die Optik einen ersten und zweiten Spiegel und/oder Prisma aufweist, die bezüglich der Löcher einander gegenüberliegend angeordnet sind, gegenüber der Lochscheibe um 45° geneigt sind und zueinander in einem Winkel von 90° stehen, gemessen zwischen reflektierenden Oberflächen der Spiegel und/oder Prismen, die den Löchern zugewandt sind,
wobei die Optik außerdem einen dritten Spiegel und/oder Prisma aufweist, der von einer Ebene geschnitten wird, in der sich die Lochscheibe erstreckt und vorzugsweise gegenüber dieser Ebene um 45° geneigt ist, und der im Strahlengang von Lichtstrahlen angeordnet ist, die die Löcher in Richtung deren Längsachse durchtreten und vom ersten oder zweiten Spiegel oder Prisma reflektiert werden,
wobei die Optik außerdem eine Kamera aufweist, die eine Blickrichtung hat, die auf den dritten Spiegel oder dritte Prisma gerichtet ist und die im Strahlengang von Licht angeordnet ist, das von den Löchern ausgehend über den ersten und zweiten Spiegel oder Prisma sowie den dritten Spiegel oder dritte Prisma verläuft, wobei vorzugsweise die Blickrichtung der Kamera in einem Winkel von 90° zu der Ebene steht, in der sich die Lochscheibe erstreckt.

10. Handhabungsvorrichtung nach einem der Ansprüche 7 bis 9, aufweisend zumindest eine Abstreiflippe, die auf der Lochscheibe in einem Abstandsbereich von der Lochscheibendrehachse aufliegt, in dem die Durchgangslöcher angeordnet sind, wobei die Abstreiflippe in Drehrichtung der Lochscheibe vor der Detektionseinrichtung angeordnet ist.

11. Handhabungsvorrichtung nach einem der vorhergehenden Ansprüche, weiter aufweisend zumindest eine Druckluftdüse, die auf die Lochscheibe in jenem Abstand von der Lochscheibendrehachse gerichtet ist, in dem die Löcher angeordnet sind und die vorzugsweise auf jener Seite der Lochscheibe angeordnet ist, die der Barriere abgewandt ist.

12. Handhabungsvorrichtung nach einem der vorhergehenden Ansprüche, wobei die Durchgangslöcher einen Durchmesser kleiner oder gleich einem Durchmesser von Kavitäten einer Mikrotiterplatte haben, weiter aufweisend einen Träger für die Mikrotiterplatte, der bezüglich der Lochscheibe der Druckluftdüse gegenüber angeordnet ist, so dass die Druckluftdüse in Richtung der Mikrotiterplatte gerichtet ist, wobei mit dem Träger die Mikrotiterplatte mit zur Lochscheibe paralleler die Kavitäten aufweisender Oberfläche haltbar ist und in Richtung parallel zu der die Kavitäten aufweisenden Oberfläche verschiebbar ist.

13. Handhabungsvorrichtung nach dem vorhergehenden Anspruch, aufweisend eine Positioniervorrichtung, mit der der Träger aus einer Einlegeposition in eine Bestückungsposition verschiebbar ist, wobei in der Bestückungsposition die Mikrotiterplatte mit zur Lochscheibe paralleler die Kavitäten aufweisender Oberfläche haltbar ist.

14. Verfahren zum Dispensieren von Objekten in eine Mikrotiterplatte, wobei die Objekte mit einer Handhabungsvorrichtung nach Anspruch 13 aus einer Flüssigkeit entnommen werden, in der die Objekte suspergiert sind, indem die Objekte dadurch in Durchgangslöcher der Lochscheibe bewegt werden, dass die Flüssigkeit durch zumindest einen Teil jener Durchgangslöcher bewegt wird, die sich in der Wanne befinden,
wobei die in den Durchgangslöchern vorliegenden Objekte durch Drehen der Lochscheibe zu der Detektionsvorrichtung bewegt werden, dann mit der Detektionsvorrichtung zumindest eine Eigenschaft der Objekte in den Durchgangslöchern detektiert wird,
und die Objekte in Abhängigkeit von einem Wert der detektierten Eigenschaft mittels eines durch die Druckluftdüse erzeugten Luftstroms in die Mikrotiterplatte bewegt werden oder nicht in die Mikrotiterplatte dispensiert werden.

15. Verfahren nach dem vorhergehenden Anspruch, wobei jene Objekte, die nicht in die Mikrotiterplatte bewegt werden, mittels eines durch eine weitere Druckluftdüse erzeugten Luftstromes an anderer Stelle aus dem entsprechenden Durchgangsloch der Lochscheibe entfernt werden und vorzugsweise in ein anderes Gefäß überführt werden.

## Claims

1. A handling device for handling objects, comprising a vat for receiving a suspension containing the objects and a liquid,
a perforated plate, which is rotatable about a perforated plate rotation axis and which has, along its periphery, a plurality of through-holes, which extend through the perforated plate,
the perforated plate partially projecting into the vat so that some of the through-holes are located in the vat,
further comprising a barrier, which is arranged behind at least those through-holes that are located in the vat,
the barrier being formed such to prevent the objects from escaping through the through-holes in the direction of the barrier but allowing the liquid to pass through at least some of the through-holes that are located in the vat, in the direction of the barrier,
further comprising a liquid transport device which is configured to convey the liquid actively through those through-holes that are located in the vat through which the barrier allows the liquid to pass,
further comprising a detection device arranged at the edge of the perforated plate such that it can be used to detect at least one property of objects present in the holes of the perforated disc,
**characterised in that** the handling device further comprises one or two transparent panels which close the through-holes at least in an area on one or both sides in which the detection device can detect at least one property of objects present in the holes.

2. The handling device according to the preceding claim, the handling device having an outflow region, which is located on the side of the perforated plate and the barrier opposite the vat such that liquid may flow from the vat through at least some of the through-holes and through the barrier into the outflow region,
the liquid transport device having a liquid duct that is connected to the outflow region such that the liquid may be sucked through the liquid duct from the outflow region, and the liquid duct being additionally connected to the vat such that the liquid is movable through the liquid duct into the vat, the liquid duct preferably comprising a tube or being a tube.

3. The handling device according to the preceding claim,
the liquid transport device additionally having a rotatable compression plate, which has compression elements along its periphery,
the compression plate being arranged such that, as the compression plate rotates, the compression elements move past the liquid duct and, in doing so, compress it.

4. The handling device according to any one of the two preceding claims, wherein the vat, the perforated plate, the outflow region and the liquid duct are part of a first module, and
the compression plate being part of a second module,
the first and the second module being connectable to one another and separable from one another as a whole.

5. The handling device according to any one of the preceding claims, the barrier comprising or being a barrier plate, which is arranged parallel to the perforated plate and which has a distance less than a diameter of the through-holes from the perforated plate,
the barrier plate having a slot which passes through the barrier plate and runs parallel to an edge of the perforated plate at a distance from the perforated plate rotation axis which is unequal to the distance of the through-holes from the perforated plate rotation axis.

6. The handling device according to the preceding claim, the outflow region being a channel that runs along the slot of the barrier plate and opens into the slot, preferably the slot and the channel having the same length.

7. The handling device according to the preceding claims, the perforated plate being inclined relative to a liquid level of the liquid in the vat when used as intended by an angle of greater than 90°, preferably greater than or equal to 120° and/or less than 180°, preferably less than or equal to 150°, particularly preferably is inclined by 135°, measured above the liquid level.

8. The handling device according to any one the preceding claims, the detection device engaging around the edge of the perforated plate and having an optical unit by means of which the at least one property of the objects present in the holes is detectable from both sides of the perforated plate.

9. The handling device according to the preceding claim, the optical unit comprising a first and second mirror and/or prism which are arranged opposite one another in relation to the holes, are inclined by 45° relative to the perforated plate, and are arranged at an angle of 90° to one another, measured between reflective surfaces of the mirrors and/or prisms facing the holes,
the optical unit additionally having a third mirror and/or prism which is intersected by a plane in which the perforated plate extends and is preferably inclined by 45° relative to this plane, and which is arranged in the beam path of light beams that pass through the holes in the direction of their longitudinal axis and are reflected by the first or second mirror or prism,
the optical unit additionally having a camera with a viewing direction directed towards the third mirror or third prism and that is arranged in the beam path of light starting from the holes, via the first and second mirrors or prisms and via the third mirror or third prism, the viewing direction of the camera preferably being at an angle of 90° to the plane in which the perforated plate extends.

10. The handling device according to any one of claims 7 to 9, comprising at least one scraper lip, which rests on the perforated plate in a distance region from the perforated plate rotation axis in which the through-holes are arranged, the scraper lip being arranged in front of the detection device in the direction of perforated plate's rotation.

11. The handling device according to any one of the preceding claims, further comprising at least one compressed-air nozzle, which is directed towards the perforated plate at the distance from the perforated plate rotation axis at which the holes are arranged and which is preferably arranged on the side of the perforated plate facing away from the barrier.

12. The handling device according to any one of the preceding claims, the through-holes having a diameter smaller than or equal to the diameter of cavities in a microtitre plate, further comprising a carrier for the microtitre plate, which is arranged opposite the perforated plate of the compressed air nozzle such that the compressed air nozzle is directed toward the microtitre plate, the carrier being able to hold the microtitre plate with a surface parallel to the perforated plate and having cavities and movable in a direction parallel to the surface having cavities.

13. The handling device according to the preceding claim, comprising a positioning device, by means of which the carrier is movable from an insertion position into a loading position, the microtitre plate being holdable in the loading position with its surface with the cavities parallel to the perforated plate.

14. A method for dispensing objects into a microtitre plate, a handling device according to claim 13 being used to remove the objects from a liquid in which the objects are suspended by moving the objects into through-holes in the perforated plate by moving the liquid through at least some of those through-holes located in the vat,
the objects present in the through holes being moved toward the detection device by rotating the perforated plate, then at least one property of the objects in the through-holes is detected with the detection device,
and, in dependence of a value of the detected property, the objects being moved, by means of an airflow generated by the compressed-air nozzle, into the microtitre plate or not being dispensed into the microtitre plate.

15. The method according to the preceding claim, those objects that are not being moved into the microtitre plate are removed from the corresponding through-hole of the perforated plate by an airflow at another location generated by a further compressed-air nozzle and preferably transferred into another vessel.

## Revendications

1. Dispositif de manipulation permettant de manipuler des objets, comprenant une cuve permettant d'accueillir une suspension contenant les objets et un liquide,
un disque perforé qui peut tourner autour d'un axe de rotation de disque perforé et qui présente, le long de sa périphérie, une pluralité de trous traversants qui s'étendent à travers le disque perforé,
dans lequel le disque perforé pénètre partiellement dans la cuve de sorte qu'une partie des trous traversants se trouve dans la cuve,
présentant en outre une barrière agencée derrière au moins les trous traversants qui se trouvent dans la cuve,
dans lequel la barrière est conçue de manière à empêcher les objets de sortir des trous traversants en direction de la barrière mais de manière à autoriser le liquide à passer en direction de la barrière à travers au moins une partie des trous traversants qui se trouvent dans la cuve,
présentant en outre un dispositif de transport de liquide qui est conçu pour transporter activement le liquide à travers les trous traversants qui se trouvent dans la cuve et à travers lesquels la barrière autorise le passage du liquide,
présentant en outre un dispositif de détection agencé sur le bord du disque perforé de manière à pouvoir détecter au moins une propriété des objets présents dans les trous du disque perforé,
**caractérisé en ce que** le dispositif de manipulation comprend en outre une ou deux plaque(s) transparente(s) qui obture(nt) d'un côté ou des deux côtés les trous traversants au moins dans une région au sein de laquelle l'au moins une propriété des objets présents dans les trous peut être détectée grâce au dispositif de détection.

2. Dispositif de manipulation selon la revendication précédente, dans lequel le dispositif de manipulation présente une région d'évacuation agencée sur le côté du disque perforé et de la barrière opposée à la cuve de sorte que du liquide peut s'écouler de la cuve à travers au moins une partie des trous traversants et à travers la barrière jusque dans la région d'évacuation,
dans lequel le dispositif de transport de liquide présente un canal de liquide qui est relié à la région d'évacuation de sorte que le liquide peut être aspiré hors de la région d'évacuation à travers le canal de liquide et dans lequel le canal de liquide est en outre relié à la cuve de sorte que le liquide peut être déplacé à travers le canal de liquide jusque dans la cuve, dans lequel le canal de liquide présente de préférence un tuyau ou est un tuyau.

3. Dispositif de manipulation selon la revendication précédente,
dans lequel le dispositif de transport de liquide présente en outre un disque de compression rotatif qui présente des éléments de compression le long de sa périphérie,
dans lequel le disque de compression est agencé de sorte que les éléments de compression se déplacent au niveau du canal de liquide lors de la rotation du disque de compression et qu'ils compriment ledit canal de liquide.

4. Dispositif de manipulation selon l'une quelconque des revendications précédentes, dans lequel la cuve, le disque perforé, la région d'évacuation et le canal de liquide font partie d'un premier module et
dans lequel le disque de compression fait partie d'un second module,
dans lequel les premier et second modules peuvent être reliés ensemble en totalité et peuvent être séparés l'un de l'autre.

5. Dispositif de manipulation selon l'une quelconque des revendications précédentes, dans lequel la barrière présente ou est un disque formant barrière qui est agencé parallèlement au disque perforé et qui présente par rapport au disque perforé un espacement inférieur à un diamètre des trous traversants,
dans lequel le disque formant barrière présente un trou allongé qui perce le disque formant barrière et s'étend parallèlement à un bord du disque perforé à une distance de l'axe de rotation de disque perforé qui est différente de la distance entre les trous traversants et l'axe de rotation de disque perforé.

6. Dispositif de manipulation selon la revendication précédente, dans lequel la région d'évacuation est une gouttière qui s'étend le long du trou allongé du disque formant barrière et qui débouche dans le trou allongé, dans lequel le trou allongé et la gouttière présentent de préférence une longueur égale.

7. Dispositif de manipulation selon l'une quelconque des revendications précédentes, dans lequel le disque perforé, lors d'une utilisation dans les conditions prévues, est incliné par rapport à un niveau de liquide du liquide dans la cuve d'un angle supérieur à 90°, de préférence supérieur ou égal à 120° et/ou inférieur à 180°, de préférence inférieur ou égal à 150°, particulièrement de préférence est incliné de 135°, la mesure étant effectuée au-dessus du niveau de liquide.

8. Dispositif de manipulation selon l'une quelconque des revendications précédentes, dans lequel le dispositif de détection entoure le bord du disque perforé et présente une optique grâce à laquelle l'au moins une propriété des objets présents dans les trous peut être détectée des deux côtés du disque perforé.

9. Dispositif de manipulation selon la revendication précédente, dans lequel l'optique présente des premier et deuxième miroirs et/ou prismes agencés de manière opposée par rapport aux trous, inclinés de 45° par rapport au disque perforé et faisant un angle de 90° l'un par rapport à l'autre, la mesure étant effectuée entre des surfaces réfléchissantes des miroirs et/ou des prismes faisant face aux trous,
dans lequel l'optique présente en outre un troisième miroir et/ou prisme intersecté par un plan dans lequel s'étend le disque perforé et incliné de préférence de 45° par rapport au dit plan, et agencé sur le trajet des rayons lumineux qui traversent les trous en direction de leur axe longitudinal et qui sont réfléchis par le premier ou le deuxième miroir ou prisme,
dans lequel l'optique comprend en outre une caméra présentant une direction de vision dirigée vers le troisième miroir ou troisième prisme et agencée sur le trajet optique de la lumière qui provient des trous en passant par les premier et deuxième miroirs ou prismes ainsi que par le troisième miroir ou troisième prisme, dans lequel la direction de vision de la caméra fait de préférence un angle de 90° par rapport au plan dans lequel s'étend le disque perforé.

10. Dispositif de manipulation selon l'une quelconque des revendications 7 à 9, présentant au moins une lèvre de raclage qui repose sur le disque perforé dans une plage de distance par rapport à l'axe de rotation de disque perforé au sein de laquelle sont agencés les trous traversants, dans lequel la lèvre de raclage est agencée avant le dispositif de détection dans le sens de rotation du disque perforé.

11. Dispositif de manipulation selon l'une quelconque des revendications précédentes, présentant en outre au moins une buse à air comprimé qui est dirigée vers le disque perforé à la distance de l'axe de rotation de disque perforé à laquelle sont agencés les trous et qui est de préférence agencée du côté du disque perforé qui est opposé à la barrière.

12. Dispositif de manipulation selon l'une quelconque des revendications précédentes, dans lequel les trous traversants présentent un diamètre inférieur ou égal à un diamètre des cavités d'une plaque de microtitrage, présentant en outre un support pour la plaque de microtitrage qui est agencé en face de la buse d'air comprimé par rapport au disque perforé, de sorte que la buse d'air comprimé est dirigée vers la plaque de microtitrage, dans lequel la plaque de microtitrage peut être retenue grâce au support avec une surface parallèle au disque perforé et présentant les cavités et peut être déplacée dans la direction parallèle à la surface présentant les cavités.

13. Dispositif de manipulation selon la revendication précédente, comprenant un dispositif de positionnement grâce auquel le support peut être déplacé d'une position d'insertion jusqu'à une position de montage, dans lequel, dans la position de montage, la plaque de microtitrage peut être retenue avec une surface parallèle au disque perforé et présentant les cavités.

14. Procédé de distribution d'objets dans une plaque de microtitrage, dans lequel les objets sont prélevés grâce à un dispositif de manipulation selon la revendication 13 à partir d'un liquide au sein duquel les objets sont en suspension, les objets étant déplacés dans des trous traversants du disque perforé grâce au déplacement du liquide à travers au moins une partie des trous traversants qui se trouvent dans la cuve,
dans lequel les objets présents dans les trous traversants sont déplacés vers le dispositif de détection par rotation du disque perforé, puis au moins une caractéristique des objets présents dans les trous traversants est détectée grâce au dispositif de détection,
et les objets sont déplacés au moyen d'un flux d'air généré par la buse d'air comprimé jusque dans la plaque de microtitrage en fonction d'une valeur de la propriété détectée, ou ne sont pas distribués dans la plaque de microtitrage.

15. Procédé selon la revendication précédente, dans lequel les objets qui ne sont pas déplacés jusque dans la plaque de microtitrage sont retirés du trou traversant correspondant du disque perforé jusqu'à un autre endroit au moyen d'un flux d'air généré par une autre buse d'air comprimé et sont de préférence transférés dans un autre récipient.
